Europäisches Patentamt

European Patent Office

Office européen des brevets

(19)

(11) EP 1 427 155 A2

(12) EUROPEAN PATENT APPLICATION

(43) Date of publication:
09.06.2004 Bulletin 2004/24

(51) Int Cl.⁷: H04L 25/02

(21) Application number: 03254783.8

(22) Date of filing: 31.07.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 16.08.2002  GB 0219173

(71) Applicant: Kabushiki Kaisha Toshiba
Tokyo 105-8001 (JP)

(72) Inventors:
• Fitton, Michael Philip
Bristol BS1 4ND (GB)

• Leong, Siew Chung
Bristol BS1 4ND (GB)
• Gargin, Douglas John
Bristol BS1 4ND (GB)
• Cepeda Lopez, Rafael Arcangel
Bristol BS1 4ND (GB)

(74) Representative: Midgley, Jonathan Lee
Marks & Clerk
57-60 Lincoln's Inn Fields
GB-London WC2A 3LS (GB)

(54) Channel estimation

(57)     This invention is generally concerned with the reception of high rate digital data, and more particularly with methods and apparatus for improved channel estimation in high rate digital data communications systems, particularly packet data communications systems.

A channel estimator for a packet data communications receiver is described. The channel estimator comprises an input to receive data for symbols of a data packet transmitted over a channel to said receiver; a memory (406) to store the received symbol data; a training sequence determiner (408, 410) to determine a training sequence using one or more variable data portions or fields of the data packet; and an adaptive filter (200) coupled to the memory and to the training sequence determiner and configured to use the received symbol data and the training sequence to determine an estimate of a response of the channel.

Figure 4

**Description**

This invention is generally concerned with the reception of high rate digital data, and more particularly with methods and apparatus for channel estimation in high rate digital data communications systems, particularly packet data communications systems.

Aspects of the invention will be described with reference to the High Rate Bluetooth link specification, although it should be understood that applications of the invention are not limited to this type of link.

The Bluetooth group of standards is concerned with short range (up to around 10 metres) rf transmission as a replacement for cables. The basic standard provides a frequency hopping spread spectrum (FHSS) link operating at 0.7 Mbps (V 1.1) or 2.1 Mbps (V 1.2). High rate Bluetooth operates at a maximum user bit rate of up to 11.4 Mbps and is associated with the IEEE 802.15 group of standards, in particular IEEE 802.15.3.

Conventional High Rate Bluetooth receivers employ a differential reception, but the performance of a differential receiver is relatively poor in environments with multipath time dispersion. The performance of a digital rf link can be improved by using coherent or pseudo-coherent detection and by employing multiple antennas and/or equalisation. Maximum likelihood sequence estimation (MLSE) is one form of non-linear equalisation which, conventionally, uses a predefined training sequence of bits, known at the receiver, to derive an estimate of the channel response. Such channel estimation is conventionally performed every time a new packet is received. MLSE-type equalisers provide good performance as long as an accurate estimate of the channel can be derived at the receiver. For many techniques an adequate channel estimate is a prerequisite for maintaining the performance of a digital link and one of the aims of the invention is to provide improved methods and apparatus for channel estimation.

MLSE (Maximum Likelihood Sequence Estimation) equalisation is a well-known technique described, for example, in J.C. Proakis, "Digital Communications", McGraw Hill, 3/e 1995. The technique is described in more detail below but, broadly speaking, an estimate is made of a sequence of symbols representing binary bits by hypothesising received symbol sequences, applying to the hypothesised sequences a channel estimate for a channel over which data has been transmitted, and comparing the result with the received data to see which estimated hypothesised sequence is the closest match. Typically the best match is found by determining the minimum mean-square error (MMSE), although other metrics may also be employed, and generally the procedure is implemented using a variant of the Viterbi algorithm.

The channel estimate comprises a set of numbers which models the transmission channel, for example comprising a complex number representing a magnitude and phase of the channel response at a particular delay. The channel response may be determined at delays of integer multiples of the symbol period, in effect defining a set of multipath components. Generally the channel response decreases at longer delays and it becomes zero after the longest multipath delay. In a digital system there may be more than one sample per symbol and, in this case, the channel response may be defined at a finer time resolution. All this is well known to the skilled person.

As the symbol period becomes significant compared to the time dispersion of the wireless channel Inter-Symbol Interference (ISI) degrades the performance of a receiver for data transmitted through the channel. The Maximum Likelihood metric provides optimal reception of data with ISI but is relatively complex to implement. However where the time dispersion is relatively small, so that there are relatively few multipath components to consider at symbol-spaced delays, the quantities of data to be processed are reduced. This is the case, for example, with short range radio links such as high rate Bluetooth (Trade Mark) links.

Conventionally channel estimation is performed by injecting a known white noise training signal into both the real channel to be estimated and into the channel estimate model. The model is then updated based upon the error between the real and estimated channel outputs. However this method requires the allocation of a portion of the channel capacity to a training signal and no such allocation has been provided for in the High Rate Bluetooth packet structure. Furthermore, accurate channel estimation generally requires a long training sequence, which again is wasteful of transmission bandwidth. Also, even were a training signal to be built into each packet, once the transmission channel had been estimated the system would not track variations in the channel while receiving a packet so that for a subsequent packet an equally long training sequence would be required, whether or not the channel estimate had in practice changed.

WO 02/05442 describes a channel estimator in which selected estimates of one or more received preamble symbols are repeated in order to generate a longer sequence of preamble symbol estimates. This, in effect, allows a shorter preamble symbol sequence to be employed, thus permitting a more rapid estimation of the impulse response of the channel.

EP 0 605 955 A describes a method of compensating for fading using a plurality of pilot signals appended to a plurality of data symbols to form successive frames. Channel impulse response estimates for blocks of pilot symbols are buffered and used to determine an interpolated channel impulse response for each data symbol. These interpolated response estimates are then applied to successive data symbols to compensate for fading and interference.

US 6,002,716 describes a receiver comprising an equaliser for determining an estimated channel impulse response. The channel estimation is performed with a variable correlation window size and a variable number of correlations, to allow optimisation of the channel estimation in response to the degree of an impulse response of the estimated transmission channel.

The present invention addresses, among other things, the problem of determining a transmission channel impulse response estimate from a packet data signal, such as a High Rate Bluetooth signal, in which none of the packet data is specifically allocated to providing a dedicated training signal. The invention also addresses the problem of providing improved channel estimations where only a short training sequence or no training sequence is provided. Aspects of the invention further address the problem of tracking variations in the channel response.

According to a first aspect of the present invention there is therefore provided a channel estimator for a packet data communications receiver, the channel estimator comprising: an input to receive data for symbols of a data packet transmitted over a channel to said receiver; a memory to store said received symbol data; a training sequence determiner to determine a training sequence using one or more variable data portions or fields of said data packet; and an adaptive filter coupled to said memory and to said training sequence determiner and configured to use said received symbol data and said training sequence to determine an estimate of a response of said channel.

The received symbol data memory may be combined with the adaptive filter.

The applicant has recognised that the High Rate Bluetooth packet data structure has a small portion of fixed data, in particular a 16-bit synchronisation word, which may be used as a training sequence. The applicant has further recognised that it is possible to derive longer training sequences using variable data portions of a packet data structure, and hence, for example, to improve the performance of an associated equaliser of the receiver. The variable data fields may comprise portions, for example of the header which are in effect known (as described further below) or they may comprise decoded portions of packet data, preferably after an error check such as a Cyclic Redundancy Check (CRC) to verify that the decoding is correct. In general improved channel estimation accuracy will tend to lead to better performance for receiver methods that require channel estimates, such as equalisation, pseudo-coherent reception, and multiple antenna reception diversity techniques.

The one or more variable data fields may comprise fields carrying information known to a receiver of which the channel estimator forms a part. For example in a High Rate Bluetooth receiver the content of the HR_ID field of the packet header will be known since this identifies the high rate network to which the receiver (or transceiver) belongs, a particular receiver (or transceiver) only being permitted to belong to one high rate network.

Additionally or alternatively the training sequence may be determined by identifying one or more substantially constant elements of the one or more variable data fields (in this context a data field comprises any region of one or more data bits or symbols). Thus, for example, bits common to a set of source and/or destination addresses known to be in use for the packet data communications can be identified and used for training. The remaining bits may be ignored or given random values or may be chosen randomly or in accordance with a known probability of occurrence of a logic state (such as a 1 or 0). Alternatively instead of a random selection weighted by a probability of a logic state, a bit value may be set in a logic state based upon the probability of occurrence of that logic state - for example, if the bit is more likely than not to be a "1", the bit can be set to a "1", and otherwise to a "0". Bits having an equal chance of being a "1" and "0" may be randomly selected or toggled each time the training sequence is used.

The training sequence may also be determined or extended by decoding data within a header or payload of a data packet. In one embodiment the decoded data is only used to determine a channel estimate if the data is error free as determined by an error check procedure. In another embodiment a channel estimate is always determined using the decoded data but only used subsequently in the receiver if the decoder is error free. Thus, for example, the entire header of a High Rate Bluetooth data packet may be employed as a training sequence by storing and decoding received header data, performing an error check on the data, and then determining a channel estimate using the header data. Since an initial channel estimate is needed to decode the header data in the first place an updated channel estimate may, in some embodiments, only be determined when there is a need to update the estimate, for example where there is a change in modulation type of the packet.

The adaptive filter may be configured to use the training sequence more than once to determine an estimated channel response. Where the adaptive filter employs an algorithm such as a least mean square (LMS) algorithm having a stepwise convergence to a solution, the step size may be reduced as the algorithm converges, with the aim of improving the accuracy of the channel estimate.

More than one training sequence may be determined for a received data packet to allow the channel estimate to be updated and variations in the channel to be tracked. This is particularly appropriate where one or more training sequences are derived from decoded packet data, such as a decoded packet header and/or one or more portions of decoded segments of user payload data within a data packet. In this way variations in the channel can be tracked during reception of data.

This is particularly advantageous for long data packets and/or rapidly changing channels, for example where the transmitter, receiver, or both are moving. Thus, for example, in a High Rate Bluetooth system where the payload comprises a plurality of payload data segments, the channel estimate can be checked and if necessary revised after or on receipt of each segment of payload data. Where a segment has been decoded incorrectly data from an earlier segment (or from an earlier part of the data packet) may be employed to determine an updated channel estimate for re-equalising the data, with the aim of correcting the decoding errors. It is easiest to apply such a technique when error detection and/or correction information is distributed at intervals within or along the packets of data.

Embodiments of the channel estimator may also include a channel estimate store and a filter initialiser to initialise the adaptive filter with data from the store. This data may comprise a channel estimate from a preceding data packet, or a channel estimate from an earlier portion of the data packet, such as an earlier segment or a header of the packet. Where it is anticipated that the channel estimate derived during the reception of a packet will be used to initialise the channel estimate for the following packet, the channel estimate may be updated using a few symbols from the final part of the packet. This ensures that the channel estimate is up-to-date.

A two or three stage channel estimation process may be employed. For example, a training sequence may be derived from a portion of the packet header and a later training sequence may then be derived from the full header of the packet. A three stage channel estimate may be derived, for example by deriving an initial estimate from a portion of the header, a second estimate (an updated version of the first or optionally a channel estimate used during the previous packet) using header data received and decoded with the first estimate as training data, and a third estimate (an updated version of the second) using received payload data. Combinations of subsets of these stages may also be employed.

Where an equaliser for a receiver comprising the channel estimator is employed in data communication over two or more links, as is envisaged will be commonplace in some Bluetooth applications, the adaptive filter may be initialised with a channel estimate for the appropriate link, preferably with the most recently determined estimate for the link. Thus in some embodiments a set of recently determined channel estimates for a corresponding set of recently used data links may be stored to facilitate initialisation of the filter for any link in the set.

It will be appreciated that a number of variations in the length and determination of the training sequence and in the implementation of the adaptive filter are possible. These variations will in general correspond to different grades of channel estimation appropriate, for example, to different modulation schemes, wireless environments, and applications. Thus the equaliser may include a power controller responsive to a power control signal input to control operational parameters of the channel estimation to allow the operation of the estimator to be varied in response to a desired power consumption. For example the frequency or rate at which training sequences and/or channel estimates are determined may be varied in accordance with the desired power consumption, reducing the frequency of channel estimate determinations to save power. For a battery powered personal digital or data assistant (PDA) for example, a lower power but reduced performance channel estimation may be appropriate since the rf link is likely to be relatively short range, whereas for a laptop computer or for the PDA when mains powered a higher power consumption higher performance method of operation for the channel estimator may be preferred.

In a related aspect the invention provides a High Rate Bluetooth data receiver for receiving High Rate Bluetooth data packets, the receiver including a channel estimator, the channel estimator comprising an input to receive data for symbols of a data packet transmitted over a channel to said receiver; a memory to store said received symbol data; a training sequence module configured to provide a training sequence comprising at least a synchronisation word of a said High Rate Bluetooth data packet; and an adaptive filter coupled to said memory and to said training sequence module and configured to use said training sequence and said received symbol data to determine an estimate of a response of said channel.

As mentioned above, the applicant has recognised that the High Rate Bluetooth packet data structure has a small portion of fixed data, in particular a 16-bit synchronisation word, which may be used as a training sequence.

Furthermore, with a packet data structure with a known preamble sequence a portion of the preamble sequence may also be employed for channel estimation. For example with a High Rate Bluetooth packet structure, in a two antennal diversity receiver half the preamble (which is used to select one or other of the antennas) is received by each antenna and thus may be employed for channel estimation and subsequent equalisation.

The invention also provides a method of determining an estimated response of a channel of a packet data communications system, the method comprising receiving data for symbols of a data packet transmitted over the channel; determining a training sequence using one or more variable data portions or fields of said data packet; and training an adaptive filter using said training sequence and said received symbols to determine said estimated channel response.

The invention further provides a method of estimating a response of a High Rate Bluetooth data channel, the method comprising receiving data for symbols of a data packet transmitted over the channel; providing a training sequence comprising at least a synchronisation word of a High Rate Bluetooth data packet for reception by said receiver; and training an adaptive filter using said training sequence and said received symbols to determine said estimated channel response.

The invention further provides a method of determining an estimated response of a data channel of a current data link of a data communications system having a plurality of data links each with a corresponding channel, the method comprising storing in a data store data for a plurality of previously determined estimates for the channels of said plurality of data links in association with data for identifying each link; determining data for identifying said current data link; retrieving from said data store previously determined channel estimate data for said current data link using said data for identifying said current data link; initialising an adaptive channel estimator using said retrieved channel estimate data; and determining said estimated response using said adaptive estimator and data received on said current data link.

In another aspect the invention provides a method of determining an estimated channel response of a data link of a packet data communications system, the method comprising determining an initial estimate of said channel response; receiving and decoding at least a portion of payload data of a data packet of the system, applying an error check to said portion of payload data to determine whether said portion of payload data has been received correctly; and determining an updated channel estimate using said portion of payload data when said error check determines that said portion of payload data has been correctly received.

The channel estimate may be updated using successive portions of the payload data to facilitate tracking of the estimated channel impulse response.

The invention also provides channel estimators configured to operate in accordance with these methods.

The skilled person will recognise that the above-described channel estimators and methods may be embodied as processor control code, for example on a carrier medium such as a disk, CD- or DVD-ROM, programmed memory such as read only memory (Firmware), or on a data carrier such as an optical or electrical signal carrier. For many applications embodiments of the invention will be implemented on a DSP (Digital Signal Processor), ASIC (Application Specific Integrated Circuit) or FPGA (Field Programmable Gate Array). Thus the code may comprise conventional programme code or microcode or, for example code for setting up or controlling an ASIC or FPGA. Similarly the code may comprise code for a hardware description language such as Verilog (Trade Mark) or VHDL (Very high speed integrated circuit Hardware Description Language). As the skilled person will appreciate, the code may be distributed between a plurality of coupled components in communication with one another.

These and other aspects of the invention will now be further described, by way of example only, with reference to the accompanying figures in which:

Figures 1a to 1d show, respectively, an exemplary Bluetooth application, an outline block diagram of a Bluetooth receiver, the structure of an unmodulated and unencoded high-rate Bluetooth packet, and a Bluetooth packet segment;

Figure 2 shows a block diagram of a known channel estimation procedure;

Figure 3 shows an embodiment of an MLSE Viterbi equaliser according to the present invention;

Figure 4 shows a block diagram of a channel estimation procedure for a High Rate Bluetooth packet header; and

Figure 5 shows a graph illustrating a progressive reduction in step size of an adaptive filter training algorithm with successive applications of substantially the same training sequence.

For convenience embodiments of the invention will be described with reference to High Rate Bluetooth but applications of the invention are not limited to this system.

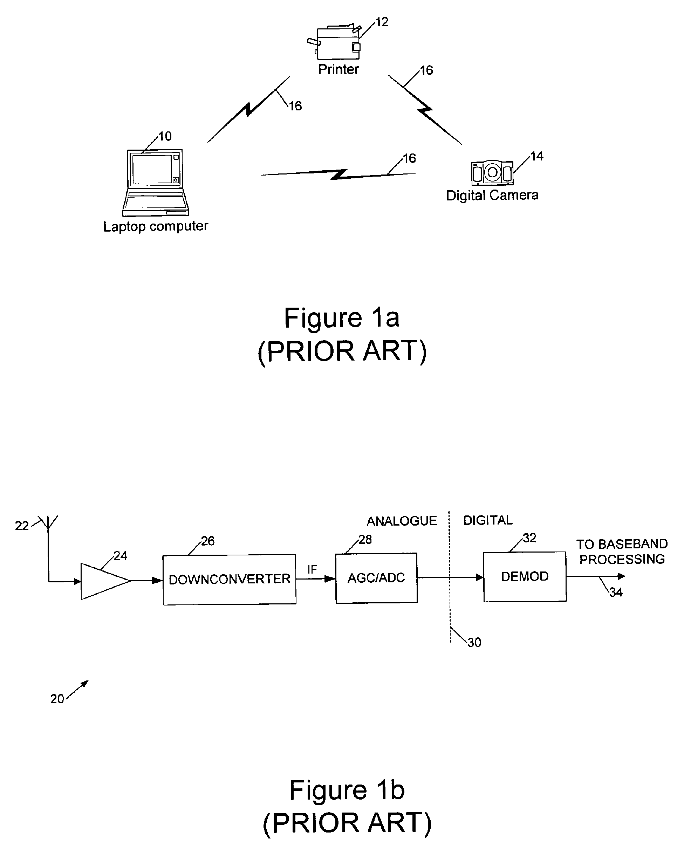

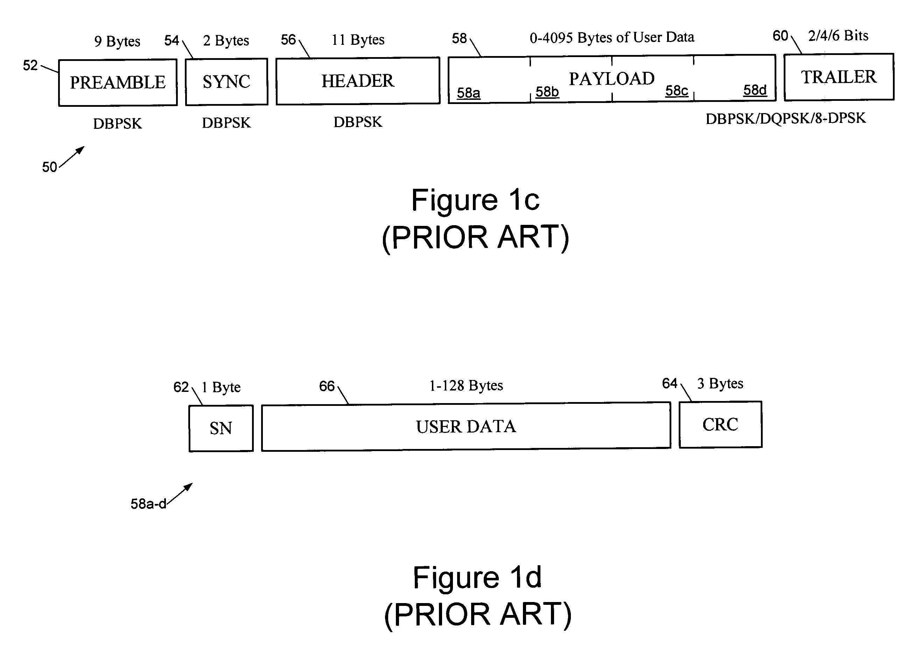

Figure 1 a shows the Bluetooth concept in which a computer 10, printer 12, and camera 14 are all in communication with one another by means of bi-directional Bluetooth radio links 16. Bluetooth can also be used for wireless connections to high speed voice/data access points.

Figure 1b shows an outline block diagram of Bluetooth receiver 20. The Bluetooth receiver 20 is typically part of a Bluetooth transceiver and a transmitter and transmit/receive switch (not shown in Figure 1b) are generally also coupled to antenna 22 to allow both transmission and reception of data. The receiver comprises an antenna 22 coupled to a pre-amplifier 24 and a downconverter 26 providing an IF (Intermediate Frequency) or alternatively baseband output to an AGC (Automatic Gain Control) and analogue-to-digital conversion (ADC) block 28 providing digital I and Q (in phase and quadrature) signals. Further processing, optionally including downconversion to baseband, then takes place in the digital domain, to the right of dashed line 30, the output from ADC 28 being provided to a digital demodulator 32 (although analogue demodulation may also be employed). Further baseband processing comprises a channel estimator and detection 34 and a decoder 36. Decoder 36 decodes source and/or channel coding and provides a baseband output 38 for further processing by a Bluetooth controller (not shown).

In more detail, the baseband processing typically comprises synchronisation means for synchronising to received data symbols (which may be sampled at less than the symbol interval), an equaliser such as a decision feedback equaliser (DFE), including a channel estimator, and an error-checker/corrector. In a preferred implementaion the equaliser is based on sequence estimation, for example using MLSE, determining and evaluating path metrics as described in more detail later. The equaliser may use a Viterbi sequence estimation algorithm as described in G. Forney, Jr. "The Viterbi Algorithm", proceedings of the IEEE vol. 61 (3), March 1973, pages 267-278. Demodulator 32 may also include a rake or other coherent multipath combiner.

Figure 1 c shows the general format of a high-rate Bluetooth data packet 50. The packet has five fields, a 9 byte preamble field 52 a 2 byte synchronisation word 54, and 11 byte header 56, a payload 58 comprising up to 4095 bytes of user data, and a trailer field 60 of either 2, 4 or 6 bits. The header field 56 contains all the address information for the packet and some additional control information. The payload 58 comprises user information and when the payload is sufficiently large it may be sub-divided into segments 58a-d.

All the segments and the header have cyclic redundancy codes (CRCs) for error-detection. The preamble 52, sync word 54 and header 56 are all modulated using DBPSK (Differential Binary Phase Shipped Keying); the modulation format of the payload is indicated in the header and is one of DBPSK, DQPSK (Differential Quadrature Phase Shift Keying), and 8-DPSK. Additional rotations of π/2 and π/4 are applied for the DBPSK and DQPSK modulation schemes respectively, when a new symbol is transmitted. The trailer is modulated in the same format as the payload and, in the absence of a payload, the trailer is modulated in the same format as the header, that is DBPSK. The preamble 52, sync 54, header 56 and payload 58 fields are described in more detail below.

The preamble 52 comprises a 72-bit sequence obtained by repeating the 8-bit sequence: 0 0 0 0 1 1 1 1, nine times. The preamble is intended for use in supporting antenna diversity and AGC (Automatic Gain Control) training. The data comprising the preamble is known but the statistical properties of the preamble do not make it well suited for a training sequence by itself. Preferably, therefore, it may be used (as described later) to lengthen a training sequence.

The sync word 54 comprises a 16-bit sequence, used for frame synchronisation, having a high auto-correlation coefficient. The sequence is: 0 0 0 0 0 0 1 0 0 1 1 1 0 1 0 1. This sequence is differentially encoded using π/2 shifted DBPSK before it is transmitted. Channel estimation training is therefore performed on the modulated version of this data.

The header field 56 contains address and control information and has its own 24-bit CRC, the total length of the header including the CRC being 88 bits. The header fields, their size in bits, and their meaning is given in Table 1 below. Although the Bluetooth specification defines a number of data fields embodiments of the invention are not limited to the specific fields discussed in this specification but may operate with any data bit or set of data bits (or modulated symbols) of a data packet.

Table 1

| Field | Size | Meaning |
| --- | --- | --- |
| HR_ID | 8 | High Rate channel ID |
| DP_ADDR | 8 | Destination Point Address |
| SP_ADDR | 8 | Source Point Address |
| MOD_TYPE | 2 | Modulation Type |
| XTD_HDR | 2 | Extended Header |
| P_L | 12 | Payload Length in Bytes |
| FEC_ON | 1 | Forward Error Correction |
| Reserved | 1 | For future use |
| Flow | 1 | Flow Control |
| PKT_SAR | 2 | Packet Segmentation and Re-assembly |
| PLD_MN | 1 | Payload Message Number |
| ARQ_MN | 1 | Arq Message Number |
| ACK_REQ | 1 | Request Acknowledgement |
| RN | 8 | Request Number |
| SN_BM | 8 | Segment Error Bitmap |
| H_CRC | 24 | Header CRC |

Field HR_ID (8 bits) is a high-rate channel identification field used to distinguish between transmissions of different high-rate networks occupying the high-rate rf channel. Since a transceiver can only belong to only one high-rate network it will only accept packets that have the same fixed HR_ID. A Bluetooth device may comprise several transceivers each associated with a different HR link.

The DP_ADDR field (8 bits) defines a destination point address. Each device participating in a Bluetooth high-rate link may have a number of "logical points". One Bluetooth high-rate device may send information to a specific "logical point" on another device via the basic physical medium. The DP_ADDR field in the packet header indicates which logical point on the receiving device the packet is testing for. In general, a single high-rate unit will be assigned multiple logical point addresses. The high-rate units are therefore able to accept the received packets intended for multiple destination point addresses. The SP_ADDR field is similar but defines a source point address. It will be appreciated that since the header employs DBPSK modulation the initial 24 bits of the header comprise 24 DBPSK symbols.

The H_CRC field (24 bits) comprises the header CRC, a cyclic redundancy check for detecting errors in the header.

Referring now to the payload field 58, the amount of user payload data that can be transmitted in a single packet is between 0 and 4095 bytes. If the amount of data to be transmitted within the packet is greater than 128 bytes then the data is split into two or more segments which are transmitted sequentially within the payload section of the packet 50.

Figure 1d shows the format of a Bluetooth packet segment such as one of segments 58a-d. Each segment is numbered with 1 byte (8-bit) sequence number SN 62 and has a 3 byte (24-bit) CRC64 to detect errors. The sequence number 62 and CRC 64 sandwich a user data field 66 containing 128 bytes (1024 bits) per segment. The last segment of the payload 58, in the illustrated example segment 58d, may be partially filled with user information, that is may hold between 1 and 128 bytes.

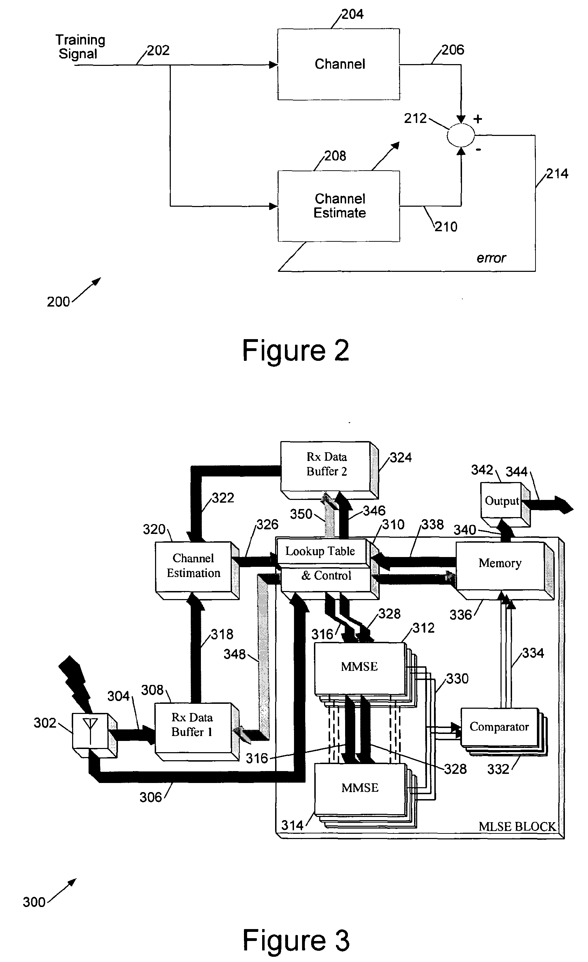

Figure 2 shows a block diagram illustrating a channel estimation procedure 200. The procedure aims to modify the coefficients of an adaptive digital filter, labelled as "channel estimate" 208 in Figure 2, so that the behaviour of the filter matches, as closely as possible, the behaviour of a transmission channel 204 being modelled.

A known training signal 202 is applied both to the transmission channel 204 to be modelled and to the adaptive filter 208 providing the channel estimate. The version of the training signal received by receiver 20 of Figure 1b corresponds to the output 206 from channel 204 and reflects the impulse response of channel 204. The output 210 from channel estimate adaptive filter 208 comprises the estimated response of the channel, and this is subtracted from the actual response in subtracter 212 to create an error signal 214 which is fed back to the adaptive channel estimate filter 208 to update the coefficients of the filter according to an adaption algorithm.

Any one of many suitable conventional algorithms may be employed, such as a Recursive Least Square (RLS) or Least Mean Square (LMS) algorithm or a variant thereof. Such algorithms will be well-known to the skilled person but, for completeness, an outline description of the LMS algorithm will also be given; reference may also be made to Lee and Messerschmitt, "Digital Communication", Kluwer Academic Publishers, 1994.

Consider an input u(n) where n equals the number or step of an input sample, buffered into an input vector **u**(n), a desired filter response d(n), and a vector of estimated filter tap weights **w**(n). The output of the filter is given by

$$y(n) = w^H(n)\ u(n)$$

where $\mathbf{w}^H$ denotes the Hermitian conjugate of **w**. Then, according to the LMS algorithm, an improved weight estimation is given by

$$w(n+1) = w(n) + \mu u(n)[d^*(n) - y^*(n)]$$

where * denotes a complex conjugate and $\mu$ is the adaption step size of the algorithm. Convergence of the algorithm can be determined using the mean squared error, that is

$$|d(n) - y(n)|^2$$

which tends to a constant value or 0 as n tends to infinity. In Figure 2 the training signal 202 corresponds to u(n), the received signal 206 to d(n), and the output 210 of channel estimate adaptive filter 208 to y(n). In a High Rate Bluetooth system the channel 204 comprises the transmitter, the wireless channel, and the receiver.

It is helpful at this point to briefly review maximum likelihood sequence estimation (MLSE) equalisation.

Consider a transmitter comprising a state machine which produces a sequence of outputs $\boldsymbol{d} = \{d_1, d_2, ...d_k\}$ where each $d_i$ represents a transmitted symbol. When the transmitted data is received, it is corrupted with noise, characterised in this example as Additive White Gaussian Noise (AWGN), *n(t)*. Thus the received signal is given by:

$$r(t) = d(t)h(t) + n(t)$$

where *d(t)h(t)* comprises a convolution of the transmitted symbols with the response *h(t)* of a channel between the transmitter and the receiver.

If the transmission bandwidth is much greater than the coherence bandwidth (the bandwidth over which the channel frequency response stays relatively flat) then the channel varies significantly over the bandwidth of the transmission. Such a so-called frequency-selective fading channel increases the probability of error, due to previous symbols interfering with the symbol that is currently being estimated. This is called Inter-Symbol Interference (ISI) and produces a received signal *r(t)* given by the sum of the generated symbols *d* convolved with the channel components *h* according to the span of the channel *q* at time *t*, as shown in equation (1) below.

$$r(t) = \sum_q d_{(t-q+1)} h(q) + n(t) \qquad \text{Equation (1)}$$

Here the "span" *q* of the channel is the length of the overall channel impulse response measured in symbol periods or, in terms of time, $(q - 1)T$ where T is a symbol period.

For mitigating the ISI effects of ISI an equaliser can be used to correct the multipath distortion. Maximum Likelihood Sequence Estimation (MLSE) equalisers attempt to make a decision on an entire sequence of symbols, providing that perfect or reasonably accurate knowledge of the channel impulse response is available at the receiver. Once this information is available at the receiver, all possible combinations of the transmit sequence can be assessed and the process of detection of symbols performed.

In more detail, all possible received sequences are calculated at the receiver and convolved with the channel estimation. The output of this convolution process is then compared with the actual observation and the error between the received signal and all the possible sequences is found. The combination of expected data presenting the smallest error with respect to the received sampled signal under analysis is stored, becoming part of the only so-called "survivor path" for this node or state.

This process continues for a predetermined number of states or, alternatively, until a complete packet of information has been received. At the end of the process the sequence presenting the smallest error is termed the survivor path, and the sequence of states defined by this path is taken as the best estimate of the transmitted data, and thus becomes the decoded received data. The predetermined length or "truncation depth" after which a decision is made can be taken to be when the survivor paths for all possible states converge. This is generally taken to be a multiple of the channel span, such as between five and ten times the span.

Figure 3 shows an example of a packet data receiver 300 including a channel estimator 320 and incorporating an MLSE Viterbi equaliser.

An rf front end indicated by antenna 302 receives an rf data signal and outputs a digitised version of the received rf data on received data buses 304 and 306, respectively coupled to a first received data buffer 308 and to a look-up table and control module 310. The look-up table and control module 310 forwards the received data to two Minimum Mean-Square Error (MMSE) modules 312, 314 on a further received databus 316. The digital data provided on buses 304, 306 and 316 may comprise one or more multi-bit samples per symbol.

The illustrated embodiment of the equaliser has two MMSE modules but other embodiments may have more than two such modules or just a single MMSE module. Each of MMSE modules 312, 314 is illustrated in Figure 3 as a set of MMSE modules since, in operation, a plurality of MMSE operations is generally performed, when estimating a received data sequence. The number of MMSE modules required generally depends on the number of states being using within the trellis.

The first received data buffer 308 provides an output 318 to channel estimation module 320. Output 318 comprises non-equalised received data which can be compared with known data such as a training sequence or confirmed received data to determine an estimate for the received channel. A second input to channel estimation module 320 is provided by an output 322 from a second received data buffer 324. The second received data buffer 324 stores equalised data and provides confirmed received data on output 322, that is data for which a cyclic redundancy check (CRC) or other error checking and/or correction has been successful. Channel estimation module 320 has an output 326 comprising a (complex) channel estimate derived from the received data. This channel estimate may be in the form of a plurality of channel components *h(q)* as described above. The channel estimate output 326 is provided to the look-up table and control module 310 for use in calculating entries in the look-up table when the channel estimate changes.

The look-up table of the look-up table and control module 310 stores a set of estimated symbol sequences obtained by convolving possible received sequences, preferably all possible received sequences for a desired channel span, with an estimate for the channel as determined by channel estimation module 320. (When calculating the values to be stored in the look up table only sequences as long as the channel span need to be considered). This estimated symbol sequence data is provided on output 328 to MMSE modules 312, 314 for comparison with actual received data to determine the difference between the received signal data and the set of estimated symbol sequences to determine the best match.

Each MMSE module 312, 314 provides an estimated error output 330 comprising estimated error data relating to the difference between the received data and the estimated symbol sequence or sequences the MMSE has processed. This data is provided to a comparator 332 which compares the estimated error data for the estimated symbol sequences to determine the best match to the received data, and provides an output 334. Output 334 may either comprise the best match estimated sequence or information identifying this sequence; where output 334 comprises the best match sequence, this may be obtained from the data provided to MMSE modules 312, 314 on output 316 of look-up table and control module 310 by including in output 310 the original hypothesised sequence data which has not been convolved with the channel estimate. A memory 336 stores the best match estimated symbol sequence for the tranche of received data processed by the equaliser. This symbol sequence is preferably input to the memory from comparator 332, although it could be provided directly or from look-up table and control module 310.

In the illustrated embodiment the best estimate of the symbol sequence is written into memory 336 from comparator 332 and then provided to the look-up table and control module 310 on memory output 338. A second output 340 from memory 336 provides equalised, decoded data to an output drive module 342 which in turn provides an output 344 comprising baseband data for further processing as required. Memory module 336 may store the decoded received data as symbols but preferably the data is stored as demodulated baseband data. Error-checking such as CRC checking may be performed by look-up table and control module 310 but is preferably performed by memory module 336. Thus the data stored in memory 336 preferably also includes the results of such error-checking and optionally, where implemented, error correction.

A portion of the decoded received data stored in memory 336 is provided to the second received data buffer 324 via input 338 to look-up table and control module 310 and an output 346 from the control module 310 to the second data buffer 324. In this way received and decoded data which has been confirmed correct by an error-checking procedure can be made available to channel estimation module 320 for determination of a channel estimate based upon received and decoded payload data, that is upon variable data, rather than upon, for example, a dedicated training sequence or other fixed data within a received data packet. In some embodiments error-checking may be carried out in the second received data buffer 324 additionally or alternatively to being carried out elsewhere.

The look-up table and control module 310 controls the operation of the equaliser as described in more detail below. In particular module 310 controls the first and second received data buffers 308, 324 by means of respective control outputs 348 and 350, and controls memory module 336 by means of control bus 352.

The structure illustrated in Figure 3, and in particular look-up table and control module (LUTC) 310, improves upon conventional MLSE Viterbi equalisers by facilitating updates of channel estimates using packet payload data as a training sequence for the channel estimator when the received information has been confirmed by an error-detecting procedure such as a CRC. Furthermore the structure facilitates the calculation of a plurality of error metrics in parallel, to compare actual received and estimated expected data. In particular the look-up table and control module 310 facilitates the distribution of data to a plurality of minimum mean-square error or other error metric-determining modules.

The first and second data buffer modules 308, 324 store related received and decoded data respectively for use in channel estimation. For information in payload 58 of data packet 50 the reliability of the stored information may be confirmed by calculating a CRC for every segment 58a-d in the received packet. Data is stored in data buffers 308 and 324 so that un-equalised received data in first buffer 308 can be matched with equalised data in second buffer 324 so that a channel estimate can be made. Since the equalised data or buffer 324 is only available later than the raw received data, the LUTC module 310 controls buffers 308 and 324 by means of control buses 348 and 350 respectively so that corresponding data is stored in each buffer.

The channel estimation module 320 calculates estimates for channel coefficients for use by the look-up table and control module 310. Channel estimate information is obtained using the methods described elsewhere in this specification.

According to one method, for example, an initial channel estimate is determined at the start of a received data packet and further channel estimates may then be determined either periodically or on demand according to the quality of the demodulated signal. In one embodiment the initial information used for channel estimation comprises a sync sequence, optionally extended, and subsequent estimates are determined during packet transmission using data read from the second received data buffer 324. It will be appreciated that information from the received data buffers is preferably only used for generating a channel estimate if an error check for the data has been successful (although an estimate could be generated but not used if an error check/detect indicated the presence of one or more errors).

The Minimum Mean-Square Error (MMSE) modules 312, 314 each compare the received data against data loaded from the look-up table of LUTC module 310 comprising a data sequence to which the channel estimate has been applied. Each MMSE module returns data indicating the error or distance between the sequence data from the look-up table and the received sequence data, according to any conventional algorithm. Two or more MMSE modules may be implemented in parallel in order to speed up the calculation process in the receiver/equaliser. The comparator module 322 analyses error values received from the MMSE modules 312, 314 and picks the symbol sequence with the smallest error for adding to the survivor paths stored in memory 336.

The look-up table and control (LUTC) module 310 controls the first and second received data buffers 308 and 324 to capture the equalised data (in symbols) that correspond to the received (complex number) data values prior to equalisation, by means of controlled buses 348 and 350 respectively. LUTC module 310 also controls these received data buffers to provide data from each to the channel estimation module 320. In this way data from the two data buffers can be arranged so that corresponding equalisation and un-equalised data is available to the channel estimation module despite these two sets of data being available at different times and points in the system. The LUTC module preferably also stops the equalisation process of subsequent information if the header has been received in error and recovery has not been possible. In some instances recovery of information in the header is possible by analysing the different survivor paths for the received data.

The LUTC 310 also compares the channel estimate in use with newly calculated channel estimate coefficients from channel estimation module 320 (presently used coefficients being stored in module 310) to determine whether the channel estimate has changed sufficiently to justify recalculating the values stored in the look-up table. The LUTC module 310 updates the information stored in the look-up table to use a newly calculated channel estimate when the difference between the values of coefficients in use and the values of more recently determined coefficients is above a threshold level (according to parameters defined at the receiver). Since the process of equalisation is preferably carried out continuously (that is continuously, periodically) the convolution of new channel estimates with the expected received data can be loaded and used by the MMSE modules 312, 314 as soon as these modules are ready to accept it. This helps in decreasing the probability of error and in maintaining a constant truncation depth.

In one implementation of the system separate channel estimates are used for the header and for subsequent payload data segments. Thus a coarse channel estimate can be used for the header (calculated, for example, from the sync word) as the DBPSK modulation is relatively robust. It will be recalled from Figure 1c that the modulation scheme of data packet 50 changes from DBPSK for the preamble 52, sync 54, and header fields 60 to one of DBPSK, DQPSK and 8-DPSK for payload 58. Thus if necessary (for example, if the modulation type has changed) a refined channel estimate can be calculated by LUTC 310 from the decision on the header data (providing the CRC is correct). This has the advantage of reducing the complexity and latency of performing channel estimation and calculating the look-up table, whilst providing more accurate channel state information. This is described in more detail below.

As previously mentioned, channel estimation procedures are well known but a problem with employing such procedures in the context of a High Rate Bluetooth packet data communications system, and in the context of some other data communications systems, is that no specific provision has been made for the inclusion of a training sequence for a channel estimator such as the adaptive filter 208 of Figure 2. However an adequate channel estimate is a pre-requisite for many advanced receiver techniques and methods and apparatus for determining such an estimate in the absence of a sequence specifically intended for channel estimation are therefore desirable.

The length and statistics of the training sequence both affect the quality of the channel estimate. In a High Rate Bluetooth packet the only fixed, and therefore known, data within a packet are the preamble and the sync word. As previously mentioned the preamble is intended to be used for supporting antenna diversity and AGC training and therefore may not be available for use for channel estimate training. This leaves the 16-bit sync word, which may provide an adequate channel estimate in some environments and for some types of modulation, but which in many applications will be too short. It is therefore desirable to able to extend the training sequence provided by the sync word and techniques for this are described below.

The relatively short training sequence provided by the sync word may be extended, in certain situations, by using a portion of the preamble and/or some header data fields of which the receiver system has at least partial knowledge, without requiring demodulation, detection, or decoding of the received packet.

In one arrangement of a two antenna receive diversity system half the preamble 52 of Figure 1 c is received on one antenna and the receiver is then switched to use a second antenna to receive a second half of the preamble. Performance metrics are determined using each half of the preamble and the antenna that appears to perform the best is used for reception of the packet. The selected antenna thus receives half the preamble data, and this data may be stored in memory (either as bits or symbols) for later use in training the channel estimate adaptive filter. This technique allows the training sequence to be extended by as much as 36 bits, that is half the 9 byte preamble sequence 52.

The training sequence can be extended by a further 8 bits by incorporating the HR_ID field of header 56. In the High Rate Bluetooth specification a transceiver can only belong to one high rate network and will therefore only accept packets with a fixed or specified HR_ID. Thus the HR_ID of all valid packets is known *a priori* and the HR_ID field may be combined with the sync word to form a longer training sequence.

The sequence may be extended still further using the DP_ADDR and SP_ADDR fields to provide a further 16 bit increase in the training sequence length. Using the techniques described below it is again possible to do this without the need to decode the header. A High Rate Bluetooth receiver will know all of its own DP_ADDRs and all of the SP_ADDRs that it could potentially receive from and, using this information, it is possible to work out which sequences are likely to be received.

One technique is to use known bits of the DP_ADDR and SP_ADDR fields whose values are common to all the possible values of these fields. Table 2 below illustrates the principle of this approach, showing five different SP_ADDR addresses and the result of a comparison of these addresses to determine which bits have values common to all the addresses. A similar procedure can be applied to the DP_ADDR fields and the results combined to provide a 16 bit result representing both values, indicating the values of common bits in the source point and destination point addresses.

Referring to the example in Table 2, this can be achieved by performing the following calculation:

Result_1 = SP_ADDR_1 & SP_ADDR_2 & SP_ADDR_3 & SP_ADDR_4 & SP_ADDR_5 Result_2 = SP_ADDR_1 | SP_ADDR_2 | SP_ADDR_3 | SP_ADDR_4 | SP_ADDR_5

Final_Result = Result_1 | ~Result _2

where & denotes a bit-wise AND operation, | denotes a bit-wise OR operation and ~ denotes a bit-wise NOT operation. The 1's in the Final Result show where the similar bits lie.

| SP_ADDR 1 | 0 | 1 | 1 | 0 | 0 | 1 | 0 | 1 |
|---|---|---|---|---|---|---|---|---|
| AND | | | | | | | | |
| SP_ADDR 2 | 0 | 1 | 1 | 0 | 0 | 1 | 1 | 0 |
| AND | | | | | | | | |
| SP_ADDR 3 | 0 | 1 | 1 | 0 | 0 | 1 | 1 | 1 |
| AND | | | | | | | | |
| SP_ADDR 4 | 0 | 1 | 1 | 1 | 1 | 1 | 0 | 0 |
| AND | | | | | | | | |
| SP_ADDR 5 | 0 | 1 | 1 | 1 | 0 | 1 | 0 | 1 |
| Result 1 | 0 | 1 | 1 | 0 | 0 | 1 | 0 | 0 |

| SP_ADDR 1 | 0 | 1 | 1 | 0 | 0 | 1 | 0 | 1 |
|---|---|---|---|---|---|---|---|---|
| OR | | | | | | | | |
| SP_ADDR 2 | 0 | 1 | 1 | 0 | 0 | 1 | 1 | 0 |
| OR | | | | | | | | |
| SP_ADDR 3 | 0 | 1 | 1 | 0 | 0 | 1 | 1 | 1 |
| OR | | | | | | | | |
| SP_ADDR 4 | 0 | 1 | 1 | 1 | 1 | 1 | 0 | 0 |
| OR | | | | | | | | |
| SP_ADDR 5 | 0 | 1 | 1 | 1 | 0 | 1 | 0 | 1 |
| Result 2 | 0 | 1 | 1 | 1 | 1 | 1 | 1 | 1 |

| Result 2 | 0 | 1 | 1 | 1 | 1 | 1 | 1 | 1 |
|---|---|---|---|---|---|---|---|---|
| NOT | | | | | | | | |
| NOT Result 2 | 1 | 0 | 0 | 0 | 0 | 0 | 0 | 0 |
| OR | | | | | | | | |
| Result 1 | 0 | 1 | 1 | 0 | 0 | 1 | 0 | 0 |
| Final Result | 1 | 1 | 1 | 0 | 0 | 1 | 0 | 0 |

**Table 2**

The receiver knows the values of the common bits and these bits can therefore be used to extend the training sequence. In one embodiment the remaining bits are not used for training, that is they may be employed in the (filter) adaption algorithm but without adapting coefficients associated with them on any particular iteration. Alternatively a value of either 1 or 0 can be randomly assigned (with equal chances of each value) to the common bits and then the complete 16-bit sequence bit used for training. This latter alternative is useful provided that the benefit of extending the sequence outweighs potential errors caused by using one or more incorrect training bits. In a refinement, where an LMS or similar algorithm is used a temporarily lower value of step size $\mu$ can be used for an iteration involving one or more unknown bits to provide some compensation for the lack of confidence in its (or their) value.

In another, related approach the probability of bits occurring in the DP_ADDR and SP_ADDR fields can be determined and used to generate a training sequence for adapting filter coefficients.

Table 3 shows a method of estimating the probability of bit values in the SP-ADDR and DP_ADDR fields, using the same five SP-ADDR addresses as Table 2. The final row of the table indicates the probability of a logic 1, a value of 100% indicating that the associated bit is certain to be a 1 and a value of 0% indicating that the value of the associated bit is certain to be a logic 0. The probability of a 1 is determined by adding up the number of 1 s and then dividing by the total number of SP_ADDR addresses.

Table 3

| SP_ADDR 1 | 0 | 1 | 1 | 0 | 0 | 1 | 0 | 1 |
|---|---|---|---|---|---|---|---|---|
| SP_ADDR 2 | 0 | 1 | 1 | 0 | 0 | 1 | 1 | 0 |
| SP_ADDR 3 | 0 | 1 | 1 | 0 | 0 | 1 | 1 | 1 |
| SP_ADDR 4 | 0 | 1 | 1 | 1 | 1 | 1 | 0 | 0 |
| SP_ADDR 5 | 0 | 1 | 1 | 1 | 0 | 1 | 0 | 1 |
| **Probability of a 1** | **0%** | **100%** | **100%** | **40%** | **20%** | **100%** | **40%** | **60%** |

Although Table 3 shows the probability of a logic 1 occurring, it will be appreciated that the choice of calculating the probability of a logic 1 or the probability of a logic 0 is arbitrary. These probabilities can be employed in two ways to determine a set of training sequence bits.

In a first method the training sequence bits are generated using a random process weighted by the calculated probabilities, and the generated sequence is then used for training the channel estimator. In this method the training sequence is preferably regenerated every time that it is needed, for example every time a packet is received, in order to provide a means by which the weighted random process can influence the channel estimate.

In a second method a training sequence is generated by using the calculated probability and imposing 50% probability threshold for choosing a value of a selected bit. Thus where the probability of a logic 1 has been determined, any bit with a probability of less than 50% is set to 0 and any bit with a probability of greater than 50% is set of a logic 1. Bits that have a probability of exactly 50% of being either a 1 or 0 may be assigned a bit value which is toggled each time the training sequence is used. Alternatively a bit value may be toggled each time a choice is made so that, for example, the first 50% chance bit is assigned a logic 1, the second 50% chance bit is assigned a logic 0, the third 50% chance bit a logic 1 and so on. This or these toggling bit or bits may be saved between packets to ensure that there is no favouritism towards a particular bit value.

This second method is particularly suitable for an LMS-type adaption algorithm and requires less overhead than the first method employing the random bit selection process described above. Once a training sequence has been generated using these bit probability values, the probabilities may be employed to weight the step size factor $\mu$ during each iteration of the adaption algorithm, to reflect the confidence present in the generated set of training sequence bits.

The above-described methods allow the training sequence to be extended from the 16-bits provided by the sync word, adding up to 60 bits, as illustrated in Table 4 below:

Table 4

| Section of packet | Bits gained |
|---|---|
| Section of the preamble | 36 |
| HR_ID | 8 |
| DP_ADDR | 8 |

Table 4   (continued)

| Section of packet | Bits gained |
| --- | --- |
| SP_ADDR | 8 |
| **Total bits gain** | **60** |

The training sequence may be further extended to allow the whole 88 bit header to be employed for training, if the header is decoded and error (CRC) checked first.

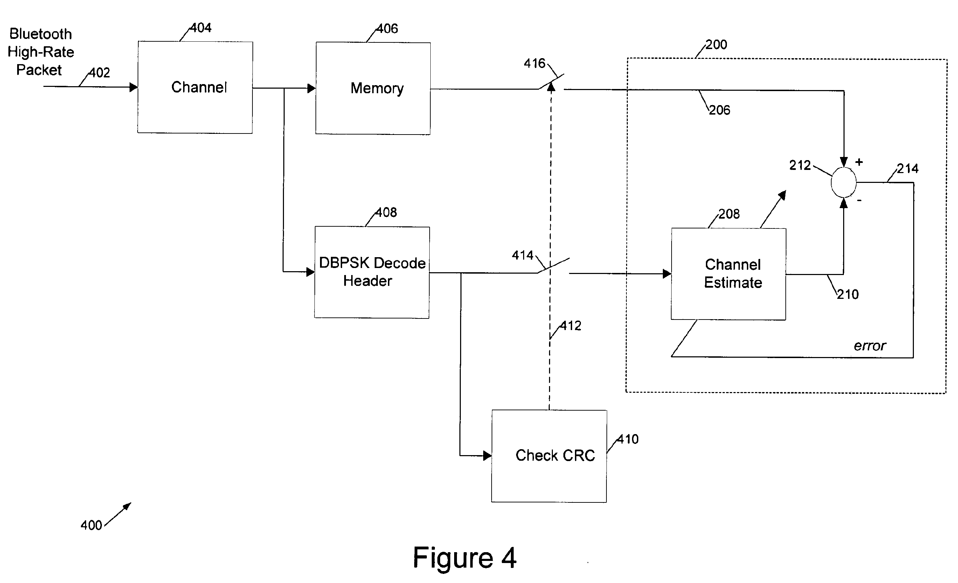

Figure 4 illustrates a system 400 for utilising all of header 56 as a training sequence. As will be explained more fully below, by contrast with the arrangement of Figure 2 the receiver does not employ any prior knowledge of the data to be received.

Referring to Figure 4, a High Rate Bluetooth data packet 402 is sent from a Bluetooth transmitter to a Bluetooth receiver and is thus modified by a channel 404 comprising the transmitter, the wireless channel, and the receiver. A portion of the received data constituting the header of the packet is stored in memory 406 and simultaneously decoded by a DBPSK High Rate Bluetooth header decoder 408. Once the header has been received and decoded a CRC (Cyclic Redundancy Code) check 410 is performed providing a result 412 and this is used to control notional switches 414, 416. These "switches" control provision of the stored received data and of the decoded header data to a channel estimator 200 substantially as previously described with reference to Figure 2.

If the CRC check 410 determines that the decoded header data is correct, logical switch 414 is closed and this header data, being known, can be used as or added to a training sequence and used to update a channel estimate. If CRC check 410 fails the channel estimate is not updated and the data packet treated as erroneous and discarded. Alternatively, to reduce latency channel estimator 200 may be arranged always to train on the received and decoded header (or segment) data, in which case the newly derived coefficients may only be used for channel equalisation if the CRC error check is successfully passed. Whether or not the latency introduced by the error check procedure is significant will often depend, at least in part, upon the receiver's equaliser and more particularly upon the latency introduced by a subsequent equalisation procedure.

Still referring to Figure 4, the DBPSK header decoder 408 will, in many embodiments, also include an equaliser utilising the channel estimate derived by system 400. Such an arrangement facilitates a two-stage channel estimation procedure.

An initial estimate of channel 404 may be obtained using the sync word 54 and, optionally a portion of the preamble 52 and the DP_ADDR and SP_ADDR fields of header 56. This initial training sequence may be sufficient to provide an adequate channel estimate for receiving the data in header 56 since the header uses DBPSK, which is a relatively robust modulation scheme. However it will be recognised that if additional data from header 56 is to be used to extend the training sequence then the DBPSK header decoder block 408 cannot begin decoding the header until after this additional data has been received. For this reason the DBPSK header decoder block 408 preferably includes sufficient memory to store this additional data, although this will increase the latency of the block. If the first three 8-bit data fields of header 56 are used for determining the initial channel estimate the latency will be approximately 24 symbol periods since in DBPSK each symbol comprises 1 bit.

Once header 56 has been received and error-checked to determine that it has been received correctly, the channel estimate can be updated by retraining the adaptive channel estimate filter using the now known header data and, preferably, taking the initial channel estimate as a starting point. Once this second, more refined, estimate has been derived it can be used for equalising the remainder of the packet, which may be modulated using DBPSK, DQPSK or 8-DPSK. Where the remainder of the packet is modulated using DBPSK the initial estimate may suffice for decoding the remainder of the packet. Thus a power consumption saving may be made by only generating the second, updated channel estimate where the payload of the packet is not modulated using DBPSK.

Some compensation for a limited length training sequence may be gained by employing an available training sequence a number of times in succession, with the aim of allowing the channel estimate to converge to a more accurate value. When using an adaptive algorithm with a stepwise progression adjustable by a configurable parameter, such as the step size $\mu$ in the LMS algorithm, this procedure may be refined. The step size parameter $\mu$ of the LMS algorithm determines both how quickly the algorithm converges to a solution, and the accuracy of the solution. The larger the value of $\mu$ the faster the convergence, but the less accurate the final result.

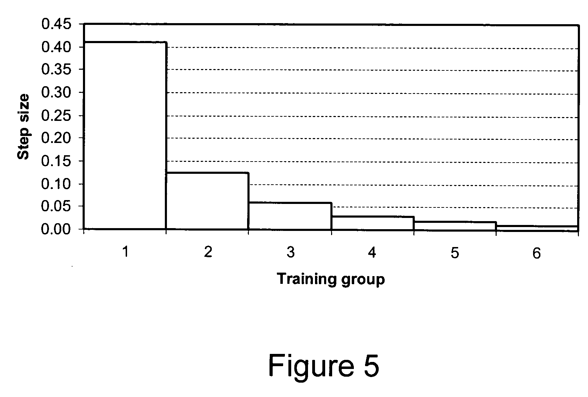

In embodiments of the system a training sequence is therefore used a plurality of times with the value of $\mu$ decreased on each successive iteration of training with the sequence. This procedure is shown in the graph of Figure 5 on which step size $\mu$ is plotted on the y axis against a count of the number of times a training sequence has been used with the adaptation algorithm on the x axis. As can be seen, initially a relatively high value is used for $\mu$ to provide a fast initial convergence of the algorithm. With successive applications of the same training sequence however the step size $\mu$ is progressively lowered, to improve the accuracy of the channel estimate during the later stages of the training.

As will be explained more fully below, in some applications and/or environments it is advantageous to update the channel estimate during reception of the payload 58 of a data packet. The prevailing technical prejudice is that the wireless channel through which a packet is transmitted will be stationary for the duration of the packet. This implies, in the context of the presently described arrangement that training of the adaptive channel estimate filter need only take place at the start of a data packet since the channel estimate so derived should be sufficient for the whole of the packet's duration. However this assumption is in fact only valid if the duration of the packet is small relative to the channel coherence time.

The channel coherence time can be calculated from the inverse of the Doppler spread as described, for example, in proakis, "Digital Communications", McGraw-Hill, 3rd edition, 1995. With a pedestrian user of a system operating in the ISM (Industrial Scientific and Medical) band at 2.4GHz, a Doppler frequency of 6Hz is a reasonably characteristic figure, which results in a coherence time of the order of hundreds of milliseconds. Thus provided the packet length is of the order of tens of milliseconds the assumption of a correlated channel over the packet duration is valid. However as High Rate Bluetooth moves into other application areas scenarios may arise where this assumption does not hold true. For example a vehicle may be equipped with a Bluetooth transceiver for operating in conjunction with a Bluetooth-equipped toll booth system and significantly lower coherence times would be expected as the vehicle approaches the toll booth. Vehicle to vehicle, such as motorcycle to motorcycle, Bluetooth-based communications links would also be expected to exhibit lower channel coherence times. For applications such as these it is desirable to be able to update a channel estimate whilst a packet is being received, particularly if the received packet is large.

As discussed with reference to Figure 1d, the payload section of a High Rate Bluetooth packet is split into segments for long packets, each segment having an associated error-check (CRC) portion 64. It is possible to take advantage of this structure to update the channel estimate using decision-derived data once a segment has been received correctly that is once a CRC check has determined that there are no errors in the received data. It will be recognised it is not necessary to use an entire payload as a training sequence and use of only a portion of the segment data may be sufficient to update the channel estimate.

A number of channel estimate re-training options are available, depending upon the degree of channel coherence. If the application of the wireless link is such that a high coherence time is guaranteed, re-training of the channel estimate during reception of the payload will not generally be necessary.

If the wireless application exhibits conditions where the channel coherence is comparable to the duration of a segment it may be necessary to train the channel estimate after every segment is received. However this additional retraining imposes a power consumption penalty and this approach is therefore preferably only employed if adverse channel conditions render it necessary.

In many cases the channel conditions will be intermediate between these two scenarios (no mid-packet re-training and re-training after every segment). In these cases it would be wasteful to retrain after every segment and a more selective re-training strategy is therefore desirable.

One approach, therefore; is to only re-train the channel estimate when this is judged to be necessary. If segment CRC error checks are continuing to be successful then it is not necessary to re-train the channel estimate but if the error check determines that errors are beginning to occur, so that segment error checks are beginning to fail, the channel estimate may then be retrained. It is preferable, therefore, with such a method to store the data from at least the most recent successfully (CRC error check passed) segment in case it is needed for re-training. It will be recognised that where re-training is to be carried out using only a portion of the segment data, only a subset of the data in the segment need be stored. In this way during normal operation if a segment CRC fails the channel estimate is re-trained with the aim of correcting the problem before the next segment is received and/or processed.

One drawback of this method, as compared with an approach in which the channel estimate is re-trained after every segment, is that re-training is triggered by a CRC fail and the failed segment is not recovered. Thus in a variant of the method the received data for the segment that failed is retained in a memory store and re-equalised using the newly generated estimate once this is available. This variant is useful when it is important to transfer data with a minimum number of retransmissions, particularly when attempting to keep power consumption as low as possible. However since the same segment needs to be processed twice this method introduces an additional latency, as well requiring memory to store the failed segment data, and using some additional power for re-equalising the data.

To further improve the accuracy of the channel estimate it is advantageous to initialise the adaptive algorithm with data approximating the channel estimate to be determined rather than, as is usual with for example an LMS algorithm, an all-zeros set of filter coefficients.

Once one packet has been received on the High Rate Bluetooth or other wireless link an estimate for the transmission channel will have been derived. The filter coefficients of this estimate can thus be used to initialise the channel estimate for a subsequently received packet. If the receiver or transceiver is only communicating with one other transceiver, on a single link, the channel estimate that was derived from the previous packet can immediately be used as a starting point for a new channel estimate. This is useful even when the previous channel estimate is relatively old since normally an earlier channel estimate will provide a better starting point for an adaptive algorithm than a fixed set of coefficients such as all zeros.

If the transceiver is involved in exchanges over two or more physical links, as is envisaged in the Bluetooth specification, the situation is more complex. For each link to be initialised with a previously calculated channel estimate, a channel estimate for each transceiver in the high rate network with which the receiver incorporating the equaliser is communicating needs to be stored. In practice, however, this need not constitute a large memory overhead since in many situations an adequate channel estimation may be obtained using a relatively small number of filter taps, in some cases as little as three taps.

In order to determine which previous channel estimate should be used in initialising a current channel estimate the receiver (and channel estimator) can use the source point address SP_ADDR since although there may be many SP_ADDRs the SP_ADDR values are not duplicated. Thus, for example in a High Rate Bluetooth network since every transceiver knows the entire network configuration it is possible to determine which SP_ADDRs emanate from the same transceiver, and it is therefore possible to match an SP_ADDR to a previously calculated channel estimate.

With this arrangement since the SP_ADDR is used to determine which data to select for initialising a channel estimate, the header, or at least the SP_ADDR portion of the header, is received and decoded prior to a decision being made on which previous estimate to pick for initialising a new estimate. This implies a two-stage channel estimation procedure, as described above, since to receive and decode the header some estimate of the channel is needed. It will be appreciated that this then gives rise to a choice as to whether to use an initial estimate of the channel determined for receiving the header for initialising a new channel estimate or whether to use an older, potentially more accurate channel estimate previously derived for the link for initialising a new estimate. In other words, either use the quick initial estimate to initialise for further training using the (now received and decoded) header data or use the channel estimate from last time (which can now be identified) to initialise for further training using the header data. There is also a third option which is to use the channel estimate from last time (i.e. the previously derived estimate for the link), without re-training, on the assumption that it is accurate enough. There are thus three main options:

1. Train using the new header data using the quick initial estimate to initialise the coefficients.
2. Use the channel estimate used for the previous packet and perform no training using the new header data.
3. Train using the new header data using the channel estimate used for the previous packet to initialise the coefficients.

The first option is suitable for applications in which it is anticipated that the channel will change rapidly, such as the above-mentioned toll booth example, and where it is desirable to track the channel response as often as possible. The second option is suitable for a low power scenario where it is not anticipated that the channel will change often, for example where transferring data between a laptop and a desktop personal computer. This option will be adequate if the data exchange is relatively small, say up to 40 Kbytes, but if larger data exchanges are anticipated it is preferable to periodically update the channel estimate using the first option, although this need not necessarily be performed for every received packet. The third option is preferable where an accurate channel estimate is required to maintain a high quality of service and where it is not anticipated that the channel will vary greatly between packets. Thus the third option is suited, for example, to transferring video between a mains powered DVD (Digital Versatile Disk) player and a mains powered television.

Where it is anticipated that a channel estimate will be used again, for example for initialising a subsequent estimate, the channel estimate may be updated at the end of a packet by re-training on some of the symbols in a final segment of the packet. In this way the age of the data used for initialisation may be reduced.

Although a channel estimate may be updated during reception of a data packet, a following equaliser can choose whether or not to use the updated estimate. For example in some instances there may be an overhead in adopting a new channel estimate, in which case the estimate may only be adopted where it differs significantly from a previously determined estimate. Such techniques are described in more detail in the applicant's co-pending application entitled "Equaliser Apparatus and Methods", filed on the same day as this application. This co-pending application describes, among other things, equalisation techniques employing a look-up table which requires time and processing power to be updated. It will be appreciated, however, that in order to determine the degree to which the channel estimate has changed a new channel estimate needs to be derived.

Broadly speaking the selection of an initialisation option will depend upon considerations of the application envisaged for the link and of power consumption and device cost. An option may also be selected dynamically in response to link conditions and/or power consumption requirements.

Embodiments of the above-described channel estimation apparatus and methods provide a number of advantages. They allow the derivation of a training signal or channel estimation from a packet data signal without channel capacity specifically allocated to provision of a training signal. The techniques also provide improved channel estimation under many circumstances, that is faster and/or more accurate and/or lower power consumption channel estimation.

This is achieved by providing an extended training sequence, if necessary based upon bit probabilities, and/or by extending the training sequence using decoded header/payload data, and/or by two-stage channel estimation, and/or repeated sequence training, and/or suitable adaptive filter initialisation techniques. Systems for re-training after segment failures and for recovering data from failed segments have also been described. Finally using decoded data for channel estimation allows periodic updating of estimated channel coefficients and hence facilitates tracking of a channel's impulse response, which is particularly helpful in rapidly changing channel conditions such as are encountered with mobile users.

It will be appreciated that although the described techniques are particularly suitable for packets with headers the principle of determining or assuming some initial channel estimate to allow the reception and confirmation (error checking) of (variable) data which may then be used to determine an improved channel estimate may be employed even where there are no packet headers as such.

The skilled person will appreciate that although the systems of Figure 1b, 2, 3 and 4 are for convenience, drawn in block diagram form in practice they may be implemented in hardware and/or software, for example on one or more programmable VLSI devices such as one or more digital signal processors, and/or in one or more ASICs. Hardware may also be specified in software by a design engineer using, for example, a hardware description language such as VHDL, the precise hardware implementation then being determined by the hardware description language compiler. The skilled person will also appreciate that the block diagrams of Figures 1b, 2, 3 and 4 show elements relevant to embodiments of the invention and, for simplicity, may not show other elements, known to the skilled person but not directly relevant to embodiments of the invention, also present in the systems.

Embodiments of the invention have been described with particular reference to short range RF packet data communication links such as High Rate Bluetooth, but applications of the invention are not limited to such links. In particular embodiments of the invention may be used with any communications link operating with packet-like units of data, frames, cells or sub-cells. Thus, the channel estimation systems and methods described herein may be applied to other RF data communication systems such as Wireless LAN networks (for example IEEE 802.11), digital mobile phone communication systems, to infra-red based communication systems, and also to wired systems where channel estimation is required.

No doubt many other effective alternatives will occur to the skilled person. It will be understood that the invention is not limited to the described embodiments and encompasses modifications apparent to those skilled in the art lying within the spirit and scope of the claims appended hereto.

**Claims**

1. A channel estimator for a packet data communications receiver, the channel estimator comprising:

   an input to receive data for symbols of a data packet transmitted over a channel to said receiver;
   a memory to store said received symbol data;
   a training sequence determiner to determine a training sequence using one or more variable data portions or fields of said data packet; and
   an adaptive filter coupled to said memory and to said training sequence determiner and configured to use said received symbol data and said training sequence to determine an estimate of a response of said channel.

2. A channel estimator as claimed in claim 1 wherein said training sequence determiner is configured to determine said training sequence by determining one or more substantially constant elements of said one or more variable data portions or fields of said data packet.

3. A channel estimator as claimed in claim 1 wherein said training sequence determiner is configured to determine said training sequence by determining probabilities for values of bits or symbols of said one or more variable data portions or fields of said data packet.

4. A channel estimator as claimed in claim 3 wherein said training sequence is determined by determining random values for said bits or symbols weighted by said probabilities.

5. A channel estimator as claimed in claim 3 wherein said training sequence is determined by selecting values for said bits or symbols dependent upon the probabilities of the selected values in comparison to a threshold.

6. A channel estimator as claimed in claim 1 wherein said training sequence determiner is configured to determine said training sequence by decoding data for at least a portion of a header of a said packet.

**7.** A channel estimator as claimed in claim 1 wherein said training sequence determiner is configured to determine said training sequence by decoding data for at least a portion of a user data payload of a said packet.

**8.** A channel estimator as claimed in claim 6 or 7 wherein said training sequence determiner is further configured to check said decoded data for errors, and wherein said channel response estimate is determined conditionally upon no errors being detected in said decoded data.

**9.** A channel estimator as claimed in any preceding claim wherein said adaptive filter is configured to use said training sequence more than once to determine said estimated channel response.

**10.** A channel estimator as claimed in claim 9 wherein said adaptive filter is configured to employ an algorithm having a stepwise convergence to a solution and wherein a step size of said algorithm is reduced after said training sequence has been used once.

**11.** A channel estimator as claimed in any preceding claim wherein said training sequence determiner is configured to determine more than one training sequence for a received data packet; and wherein said adaptive filter is configured to determine a first estimated channel response using a first said training sequence and a second estimated channel response using a later said training sequence.

**12.** A channel estimator as claimed in claim 11 wherein said first training sequence is derived from a packet header and said later training sequence is derived from payload data of said packet.

**13.** A channel estimator as claimed in claim 12 wherein said adaptive filter is configured to determine a plurality of said later training sequences for updating said second estimated channel response.

**14.** A channel estimator as claimed in claim 11, 12 or 13, further comprising a payload data memory to store erroneously received payload data and an equaliser to equalise payload data in said payload data memory using said second estimated channel response to attempt to correct said erroneous data.

**15.** A channel estimator as claimed in claim 11 further comprising an initialiser to initialise said adaptive filter using said first estimated channel response for determining said second estimated channel response.

**16.** A channel estimator as claimed in any one of claims 1 to 14 further comprising a channel estimate store and an initialiser to initialise said adaptive filter with data from said channel estimate store.

**17.** A channel estimator as claimed in claim 16 wherein said channel estimate store is configured to store a channel estimate for a data packet immediately preceding said data packet for which said adaptive filter is configured to determine an estimated channel response.

**18.** A channel estimator as claimed in claim 16 or 17 comprising a plurality of said channel estimate stores each corresponding to a data link, to store a plurality of channel estimates and a plurality of associated link identifiers, and wherein said filter initialiser is configured to initialise said adaptive filter with a channel estimate associated with a data link over which said symbols are received.

**19.** A channel estimator as claimed in any preceding claim further comprising a power controller responsive to a power control signal to control said determination of said estimated channel response.

**20.** A Bluetooth data receiver including the channel estimator of any preceding claim.

**21.** A High Rate Bluetooth data receiver for receiving High Rate Bluetooth data packets, the receiver including a channel estimator, the channel estimator comprising:

an input to receive data for symbols of a data packet transmitted over a channel to said receiver;
a memory to store said received symbol data;
a training sequence module configured to provide a training sequence comprising at least a synchronisation word of a said High Rate Bluetooth data packet; and
an adaptive filter coupled to said memory and to said training sequence module and configured to use said training sequence and said received symbol data to determine an estimate of a response of said channel.

22. A Bluetooth data receiver as claimed in claim 21 wherein said training sequence further comprises at least half the preamble sequence of a said High Rate Bluetooth data packet.

23. A method of determining an estimated response of a channel of a packet data communications system, the method comprising:

   receiving data for symbols of a data packet transmitted over the channel;
   determining a training sequence using one or more variable data portions or fields of said data packet; and
   training an adaptive filter using said training sequence and said received symbols to determine said estimated channel response.

24. A method as claimed in claim 23 wherein said determining comprises determining one or more substantially constant elements of said one or more variable data portions or fields of said data packet.

25. A method as claimed in claim 23 decoding data for at least a portion of a header of a said packet determining probabilities for values of bits or symbols of said one or more variable data portions or fields of said data packet.

26. A method as claimed in claim 25 wherein said determining further comprises determining random values for said bits or symbols weighted by said probabilities.

27. A method as claimed in claim 25 wherein said determining further comprises selecting values for said bits or symbols dependent upon the probabilities of the selected values in comparison to a threshold.

28. A method as claimed in claim 23 wherein said determining comprises decoding data for at least a portion of a header of a said packet.

29. A method as claimed in claim 23 wherein said determining comprises decoding data for at least a portion of a user data payload of a said packet.

30. A method as claimed in claim 28 or 29 wherein said determining further comprises checking said decoded data for errors, and wherein said training is conditional upon said checking finding no errors.

31. A method as claimed in any one of claims 23 to 30 further comprising repeating said training using said training sequence.

32. A method as claimed in any one of claim 31 wherein said adaptive filter is configured to employ an algorithm having a stepwise convergence to a solution, the method further comprising reducing a step size of said algorithm when repeating said training.

33. A method as claimed in any one of claims 23 to 32 wherein said determining comprises determining a plurality of said training sequences for said data packet, said training determining a first estimated channel response using a first said training sequence and a second estimated channel response using a later said training sequence.

34. A method as claimed in claim 33 wherein said first training sequence is derived from a packet header and said later training sequence is derived from payload data of said packet.

35. A method as claimed in claim 34 wherein said determining further comprises determining a plurality of said later training sequences for updating said second estimated channel response.

36. A method as claimed in claim 33 wherein said determining of said second estimated channel response uses said first estimated channel response for initialising said training.

37. A method as claimed in any one of claims 33 to 36 further comprising storing erroneous payload data and processing said erroneous data using said second estimated channel response to attempt to correct said erroneous data.

38. A method as claimed in any one of claims 23 to 37 further comprising initialising said adaptive filter using previously stored estimated channel response data.

**39.** A method as claimed in claim 38 wherein said previously stored estimated channel response data comprises estimate data derived from a data packet immediately preceding said data packet.

**40.** A method as claimed in claim 38 or 39 further comprising storing estimate data for a plurality of channels; determining a current channel; and initialising said adaptive filter with estimate data for said current channel.

**41.** A method as claimed in any one of claims 23 to 40 further comprising adjusting said training responsive to a desired power consumption signal.

**42.** A method as claimed in any one of claims 23 to 41 wherein said packet data communications system is a High Rate Bluetooth data communications system.

**43.** A method of estimating a response of a High Rate Bluetooth data channel, the method comprising:

receiving data for symbols of a data packet transmitted over the channel;
providing a training sequence comprising at least a synchronisation word of a High Rate Bluetooth data packet for reception by said receiver; and
training an adaptive filter using said training sequence and said received symbols to determine said estimated channel response.

**44.** A method of determining or providing a training sequence as set out in any preceding claim.

**45.** A method of determining an estimated response of a data channel of a current data link of a data communications system having a plurality of data links each with a corresponding channel, the method comprising:

storing in a data store data for a plurality of previously determined estimates for the channels of said plurality of data links in association with data for identifying each link;
determining data for identifying said current data link;
retrieving from said data store previously determined channel estimate data for said current data link using said data for identifying said current data link;
initialising an adaptive channel estimator using said retrieved channel estimate data; and
determining said estimated response using said adaptive estimator and data received on said current data link.

**46.** A method of determining an estimated channel response of a data link of a packet data communications system, the method comprising:

determining an initial estimate of said channel response;
receiving and decoding at least a portion of payload data of a data packet of the system;
applying an error check to said portion of payload data to determine whether said portion of payload data has been received correctly; and
determining an updated channel estimate using said portion of payload data when said error check determines that said portion of payload data has been correctly received.

**47.** A method as claimed in claim 46 comprising determining a plurality of successive updated channel estimates for a single said packet using successive portions of said payload data.

**48.** A method as claimed in claim 46 or 47 wherein said determination of an updated channel estimate is conditional upon a previously received portion of payload data of said data packet having been erroneously received.

**49.** A method as claimed in claim 46, 47 or 48 further comprising storing a previously received erroneous portion of payload data; and processing said erroneous portion of payload data using said updated channel estimate to attempt recovery of said erroneous portion of data.

**50.** A channel estimator configured to operate in accordance with the method of any one of claims 23 to 49.

**51.** Processor control code to, when running implement the channel estimator of any one of claims 1 to 19, or the Bluetooth data receiver of any one of claims 20 to 22, or the method of any one of claims 23 to 49.

**52.** A carrier carrying the processor control code of claim 51.

# Figure 1a
## (PRIOR ART)

# Figure 1b
## (PRIOR ART)

EP 1 427 155 A2

9 Bytes   54   2 Bytes   56   11 Bytes   58   0-4095 Bytes of User Data   60   2/4/6 Bits

52

| PREAMBLE | SYNC | HEADER | PAYLOAD 58a 58b 58c 58d | TRAILER |

DBPSK   DBPSK   DBPSK   DBPSK/DQPSK/8-DPSK

50

## Figure 1c
## (PRIOR ART)

62   1 Byte   66   1-128 Bytes   64   3 Bytes

| SN | USER DATA | CRC |

58a-d

## Figure 1d
## (PRIOR ART)

Figure 2

Figure 3

Bluetooth High-Rate Packet 402

404 Channel

406 Memory

408 DBPSK Decode Header

410 Check CRC

416

414

412

200

206

208 Channel Estimate

210

212 + −

214

error

400

Figure 4

Figure 5